# EUROPÄISCHE PATENTSCHRIFT

(11) **EP 1 117 951 B1**
(45) Veröffentlichungstag und Bekanntmachung des Hinweises auf die Patenterteilung: **12.12.2001**
(21) Anmeldenummer: 99948827.3
(22) Anmeldetag: 22.09.1999
(51) Int. Cl.: F16H 61/02, F16H 59/14

(54) **VERFAHREN ZUR STEUERUNG EINES SELBSTTÄTIG SCHALTENDEN GETRIEBES**
METHOD FOR CONTROLLING AN AUTOMATIC TRANSMISSION
PROCEDE DE COMMANDE D'UNE BOITE DE VITESSES AUTOMATIQUE

(30) Priorität: 28.09.1998 DE 19844375
(43) Veröffentlichungstag der Anmeldung: 25.07.2001
(73) Patentinhaber: ZF FRIEDRICHSHAFEN Aktiengesellschaft, 88038 Friedrichshafen (DE)
(72) Erfinder: SCHULER, Franz-Josef, D-88079 Kressbronn (DE); VALLASTER, Wolfgang, D-88074 Meckenbeuren (DE); BUCHER, Adolf, D-88079 Kressbronn (DE)
(86) Internationale Anmeldenummer: EP9907042
(87) Internationale Veröffentlichungsnummer: WO0019129

(56) Entgegenhaltungen:
- EP-A- 0 569 668
- WO-A-96/28670
- DE-A- 3 539 684
- DE-A- 4 219 362
- DE-A- 4 333 583
- DE-A- 4 419 753

## Beschreibung

Die Erfindung betrifft ein Verfahren zur Steuerung eines selbsttätig schaltenden Getriebes gemäß dem Oberbegriff von Anspruch 1. Als nächstkommender stand der Technik ist die DE-A-4 333 583 anzusehen.

In der elektronischen Steuerungseinrichtung von modernen automatischen Schaltgetrieben sind üblicherweise mehrere Schaltprogramme gespeichert. Ein Schaltprogramm enthält üblicherweise einen Satz von Schaltkennlinien. Jede Schaltkennlinie enthält für einen bestimmten Gangwechsel, z. B. dritter Gang nach vierter Gang, die Information, bei welcher Geschwindigkeit bzw. Drehzahl und welcher Lastvorgabe bzw. Fahrpedalstellung der Gangstufenwechsel ausgelöst wird.

Die DE 39 22 051 C2 offenbart ein Verfahren, bei dem aus dem Fahrpedalstellungssignal ein Gradientensignal ermittelt und, abhängig vom Wert dieses Gradientensignals, in ein leistungsoptimiertes Schaltprogramm umgeschaltet wird.

Dieses Verfahren ist geeignet, einem Fahrer spontan ein Schaltprogramm mit höheren Schaltdrehzahlen und entsprechenden Zugkraft-Überschüssen bereitzustellen, was beispielsweise während eines Überholvorgangs erwünscht sein kann.

Bei automatischen Schaltgetrieben besteht das grundsätzliche Problem, daß nach der Schaltungsauslösung bis zum Beginn der Übersetzungsänderung eine bestimmte Zeitdauer verstreicht. Diese Zeitdauer wird bei elektro-hydraulisch gesteuerten Getrieben für das Befüllen einer zuschaltenden Kupplung und/oder für das Absenken des Druckniveaus einer abschaltenden Kupplung benötigt. Insbesondere, wenn der Fahrer eine schnelle Lasterhöhung vornimmt und eine Rückschaltung erwartet, ist diese Zeitdauer störend, da eine spürbare Reaktion des Getriebes erst verzögert erfolgt.

Durch ein Verfahren, wie es beispielsweise in der DE 196 48 383 A1 offenbart ist, läßt sich diese Zeitdauer in bestimmten Grenzen verkürzen, um die Spontaneität des Getriebes zu erhöhen.

Aufgabe der vorliegenden Erfindung ist, eine weitere Erhöhung der Spontaneität des Getriebes zu erzielen.

Erfindungsgemäß wird diese Aufgabe durch ein auch die Merkmale des kennzeichnenden Teils des Hauptanspruchs aufweisendes Verfahren gelöst. Durch die Unteransprüche sind vorteilhafte Ausgestaltungen des Verfahrens gegeben.

Anhand des Gradientensignals wird die Änderungsgeschwindigkeit des Leistungssteuerorgans (Fahrpedal) überwacht. Übersteigt der Wert des Gradientensignals bei einem schnellen Niedertreten des Fahrpedals einen vorgebbaren Grenzwert, wird unmittelbar eine Rückschaltung bereits vor dem Überschreiten der Schaltkennlinie ausgelöst. Die Reaktion des Getriebes erfolgt um die Zeitdauer früher, welche ansonsten bis zum Überschreiten der Schaltkennlinie verstreichen würde. In einer Fahrsituation, in der, ausgehend von einer niedrigen Laststellung von z. B. 10 % der Vollaststellung, das Fahrpedal schnell niedergetreten wird und die Rückschaltung erst bei einer hohen Laststellung von z. B. 90 % der Vollaststellung ausgelöst würde, kann erfahrungsgemäß eine Verkürzung der Reaktionszeit des Getriebes von ca. 200 ms erzielt werden.

Die Erfindung macht sich die Erkenntnis zunutze, daß, wenn das Fahrpedal mit einer bestimmten Geschwindigkeit niedergetreten wird, es in der Regel auch bis zu hohen Laststellungen betätigt wird, die dann ohnehin eine Rückschaltung zur Folge hätten.

Um auch dem weniger häufig auftretenden Fall, bei dem die Schaltkennlinie nach dem Auftreten eines hohen Gradientenwertes doch nicht überschritten wird, gerecht zu werden, ist nach der Erfindung vorgesehen, daß die Rückschaltung wieder abgebrochen wird, wenn der aktuelle Wert des Gradientensignals einen weiteren Grenzwert unterschreitet, bevor die Schaltkennlinie überschritten wurde. Wenn also die Betätigungsgeschwindigkeit abnimmt und den weiteren Grenzwert unterschreitet, wird darauf geschlossen, daß die Schaltkennlinie mit hoher Wahrscheinlichkeit doch nicht überschritten wird und die Rückschaltung wird abgebrochen. Bei einer Überschneidungsschaltung, bei der eine Kupplung zu- und eine Kupplung abgeschaltet wird, ist der Abbruch der Rückschaltung üblicherweise bis zu dem Zeitpunkt möglich, an dem an der abschaltenden Kupplung Schlupf auftritt. Der Grenzwert, unterhalb dessen die Rückschaltung wieder abgebrochen wird, kann beispielsweise gleich dem Grenzwert, oberhalb dessen die Rückschaltung ausgelöst wird, sein, wodurch sich Vereinfachungen bei der Applikation ergeben.

Die Einstellung der Grenzwerte hat erheblichen Einfluß auf das Getriebeverhalten. Um dem Verhalten von verschiedenen Fahrertypen besser gerecht zu werden, ist es vorteilhaft, wenn die Grenzwerte für das Gradientensignal von einer Fahraktivitäts-Kenngröße, welche üblicherweise zur Umschaltung zwischen verschiedenen Schaltprogrammen herangezogen wird, abhängen.

Wenn die Grenzwerte für das Gradientensignal, abhängig von der aktuellen Gangstufe, vorgebbar sind, kann eine weitere Verbesserung des Getriebeverhaltens erzielt werden. Beispielsweise ist es sinnvoll, in den unteren Gangstufen höhere Grenzwerte vorzugeben, um unerwünschte Rückschaltungen, die sich in den unteren Gangstufen wegen der größeren Übersetzungssprünge stärker auswirken, zu verhindern.

Wenn die Rückschaltung infolge der Überschreitung des Gradientengrenzwerts nur dann ausgelöst wird, wenn die Getriebetemperatur in einem vorgebbaren Wertebereich liegt, wird der Nachteil von unerwünschten hohen Motordrehzahlen bei kaltem oder sehr heißem Getriebe vermieden. Der eingeschränkte Wertebereich der Getriebetemperatur liegt beispielsweise zwischen 30 °C und 150 °C.

Die Abtriebsdrehzahl des Getriebes ist unter Normalbedingungen proportional zur Fahrzeuggeschwindigkeit. Wenn die Rückschaltung durch die vorgeschlagene Funktion nur in einem vorgebbaren Wertebereich der Abtriebsdrehzahl ausgelöst wird, werden dadurch unerwünschte Rückschaltungen bei langsamen Geschwindigkeiten, welche üblicherweise innerhalb geschlossener Ortschaften gefahren werden, und sehr hohen Autobahngeschwindigkeiten vermieden.

Eine weitere vorteilhafte Einschränkung der Zustände, in denen eine Rückschaltung durch die vorgeschlagene Funktion ausgelöst wird, ist durch einen vorgebbaren Wertebereich des Motormoments gegeben. Das Auslösen einer Rückschaltung macht nur Sinn, wenn sicher auch Zugbetrieb vorliegt, wenn also das Motormoment positiv ist und einen bestimmten Wert, z. B. 30 % des Vollastmoments, überschreitet.

Schließlich können unzulässig hohe Motordrehzahlen dadurch vermieden werden, daß die Rückschaltung bereits vor dem Überschreiten der Schaltkennlinie nur dann ausgelöst wird, wenn die Gangstufe, in die zurückgeschaltet werden soll, nicht kleiner als eine Gangstufe ist, die bei der aktuellen Abtriebsdrehzahl noch eingelegt werden kann, ohne unzulässig hohe Motordrehzahlen zu erzeugen.

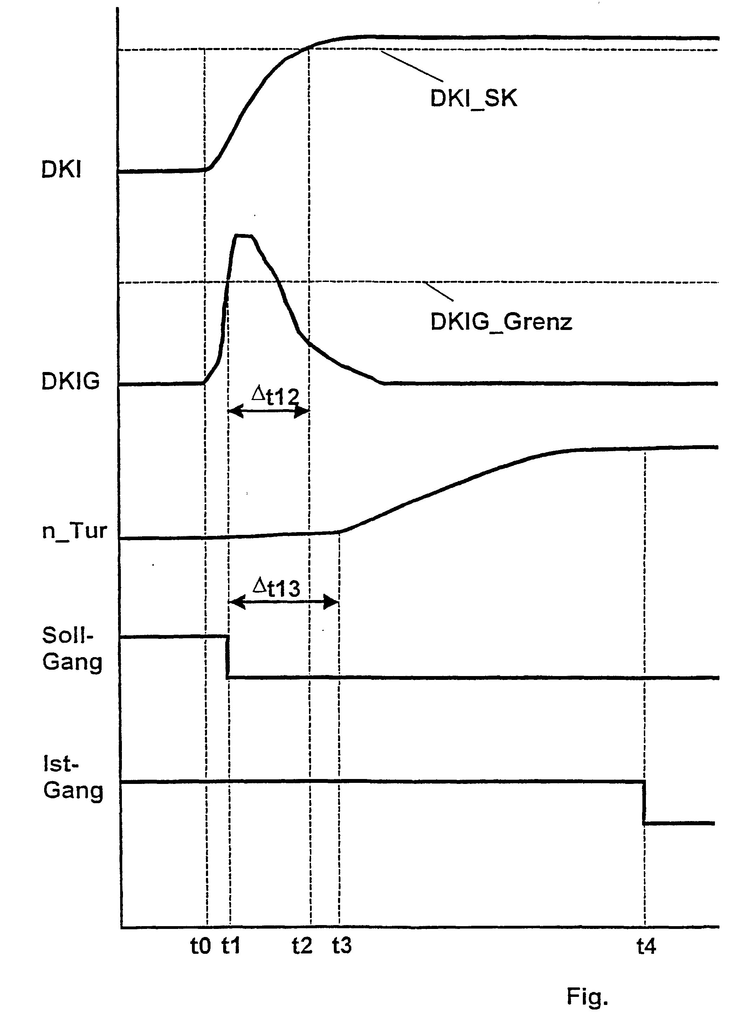

Anhand der beigefügten Zeichnung wird die Erfindung näher erläutert.

Die einzige Figur zeigt den zeitlichen Signalverlauf der Fahrpedalstellung DKI, des Fahrpedalgradienten DKIG, der Getriebeeingangsdrehzahl n_Tur, des Soll-Gangs und des Ist-Gangs.

Ausgehend von einer nicht beschleunigten Konstantfahrt mit einer Laststellung von beispielsweise DKI = 10 % der Vollaststellung in einem Ausgangs-Gang (z. B. vierter Gang) tritt der Fahrer zum Zeitpunkt t0 das Fahrpedal schnell nieder. Bei bekannten Verfahren würde eine Rückschaltung erst zum Zeitpunkt t2 ausgelöst werden, zu dem die Rückschaltkennlinie überschritten wird. Die Rückschaltkennlinie wird beim vorliegenden Beispiel überschritten, wenn DKI größer dem Grenzwert DKI_SK ist. Bei bekannten Verfahren verstreicht also zwischen dem Zeitpunkt t0, zu dem der Fahrer mit der Lasterhöhung beginnt, bis zu dem Zeitpunkt t2, zu dem beim Überschreiten der Schaltkennlinie die Schaltung ausgelöst würde, eine nicht unerhebliche Zeitdauer.

Beim erfindungsgemäßen Verfahren wird das Gradientensignal DKIG mit dem vorgebbaren Grenzwert DKIG_Grenz verglichen und die Rückschaltung bereits zum Zeitpunkt t1 ausgelöst, zu dem das Signal DKIG den Grenzwert DKIG_Grenz überschreitet. Zum Zeitpunkt der Schaltungsauslösung t1 ändert sich der Wert des Signals Soll-Gang. Nachdem bisher z. B. der vierte Gang eingelegt war, soll nunmehr in den dritten Gang geschaltet werden. Die Schaltungsauslösung erfolgt beim erfindungsgemäßen Verfahren um das Zeitintervall Δtl2 früher. Nach der Schaltungsauslösung zum Zeitpunkt t1 verstreicht zum Befüllen der zuschaltenden Kupplung bzw. zum Absenken des Druckniveaus der abschaltenden Kupplung die Zeitdauer Δtl3, bevor der Fahrer zum Zeitpunkt t3 eine Reaktion des Getriebes auf seine Lasterhöhung verspürt. Zum Zeitpunkt t3 beginnt die Schlupfphase der Rückschaltung, in der die Getriebeeingangsdrehzahl n_Tur und damit die Motordrehzahl schnell steigen. Zum Zeitpunkt t4 zeigt das Signal Ist-Gang an, daß die Schaltung abgeschlossen ist. Das Signal Ist-Gang hat dann den gleichen Wert wie das Signal Soll-Gang.

Im vorliegenden Beispiel wird das Fahrpedalgradientensignal zur Auslösung der Rückschaltung verwendet. Es ist ohne weiteres möglich, andere Signale für diesen Zweck heranzuziehen, wie z. B. ein Motormomentensignal.

### Bezugszeichen

- DKI: Signal Fahrpedalstellung
- DKI_SK: Wert des DKI-Signals, bei dem eine Rückschaltkennlinie überschritten wird
- DKIG: Signal Fahrpedalgradient
- DKIG_Grenz: Grenzwert
- n_Tur: Getriebeeingangsdrehzahl (Turbinendrehzahl)
- Soll-Gang: Soll-Gangstufe
- Ist-Gang: Ist-Gangstufe
- t0: Zeitpunkt; Beginn der Lasterhöhung
- t1: Zeitpunkt; Überschreiten des Grenzwerts
- t2: Zeitpunkt; Überschreiten der Schaltkennlinie
- t3: Zeitpunkt; Beginn Schlupfphase
- t4: Zeitpunkt; Ende Schaltung

## Patentansprüche

1. Verfahren zur Steuerung eines von einer elektronischen Steuerungseinrichtung gesteuerten, selbsttätig schaltenden Getriebes mit mehreren Gangstufen, bei dem ein Leistungssteuerorgan zur Lastvorgabe vorgesehen ist und ein von der Stellung des Leistungssteuerorgans abhängiges Signal (DKI) - insbesondere ein Fahrpedalstellungs- oder Drosselklappensignal - erfaßt wird und daraus ein der Änderungsgeschwindigkeit proportionales Gradientensignal (DKIG) gebildet wird, wobei für jeden Gangstufenwechsel mindestens eine Schaltkennlinie in der elektronischen Steuerungseinrichtung abgelegt ist, welche jeder Stellung des Leistungssteuerorgans eine Schaltdrehzahl bzw. -geschwindigkeit zuordnet, und eine Rückschaltung in eine niedrigere Gangstufe ausgelöst wird, wenn beim Betätigen des Leistungssteuerorgans im Sinne erhöhter Lastvorgabe eine Schaltkennlinie überschritten wird, wobei das Gradientensignal (DKIG) mit einem vorgebbaren Grenzwert (DKIG_Grenz) verglichen wird und eine Rückschaltung bereits vor dem Überschreiten der Schaltkennlinie ausgelöst wird, wenn der aktuelle Wert des Gradientensignals größer als der Grenzwert ist, **dadurch gekennzeichnet, dass** die Rückschaltung wieder abgebrochen wird, wenn der aktuelle Wert des Gradientensignals einen weiteren Grenzwert unterschreitet, bevor die Schaltkennlinie überschritten wurde.

2. Verfahren nach Anspruch 1, **dadurch gekennzeichnet, dass** in der elektronischen Steuerungseinrichtung eine Fahraktivitäts-Kenngröße ermittelt wird, und dass die Grenzwerte für das Gradientensignal von der Fahraktivitäts-Kenngröße abhängen.

3. Verfahren nach Anspruch 1 oder 2, **dadurch gekennzeichnet, daß** die Grenzwerte für das Gradientensignal von der aktuellen Gangstufe abhängen.

4. Verfahren nach einem der Ansprüche 1 bis 3, **dadurch gekennzeichnet, daß** die Rückschaltung bereits vor dem Überschreiten der Schaltkennlinie nur dann ausgelöst wird, wenn die Getriebetemperatur in einem vorgebbaren Wertebereich liegt.

5. Verfahren nach einem der Ansprüche 1 bis 4, **dadurch gekennzeichnet, daß** die Rückschaltung bereits vor dem Überschreiten der Schaltkennlinie nur dann ausgelöst wird, wenn die Abtriebsdrehzahl in einem vorgebbaren Wertebereich liegt.

6. Verfahren nach einem der Ansprüche 1 bis 5, **dadurch gekennzeichnet, daß** die Rückschaltung bereits vor dem Überschreiten der Schaltkennlinie nur dann ausgelöst wird, wenn das Motormoment in einem vorgebbaren Wertebereich liegt.

7. Verfahren nach einem der Ansprüche 1 bis 6, **dadurch gekennzeichnet, daß** die Rückschaltung bereits vor dem Überschreiten der Schaltkennlinie nur dann ausgelöst wird, wenn die Gangstufe, in die zurückgeschaltet werden soll, nicht kleiner als eine Gangstufe ist, die bei der aktuellen Abtriebsdrehzahl noch eingelegt werden kann, ohne unzulässig hohe Motordrehzahlen zu erzeugen.

## Claims

1. Method for controlling an ECU-controlled multi-step automatic transmission, equipped with a power control unit for load setting, whereby a signal (DKI) depending on the position of the power control unit - especially an accelerator pedal or throttle valve signal - is recorded for the creation of a speed change-proportionate gradient signal (DKIG), whereby at least one shifting characteristic curve for each gear step change is stored in the electronic control unit, which assigns a shifting speed to each control unit position, and a downshift is triggered if power control unit actuation for raised load setting causes a shifting characteristic curve to be exceeded, whereby the gradient signal (DKIG) is compared with a settable limit value (DKIG_Grenz) and a downshift is triggered before the shifting characteristic curve is exceeded if the current gradient signal value is higher than the limit value,
**characterized**
**in that** the downshift is aborted if the current gradient signal value falls below another limit value before the shifting characteristic curve is exceeded.

2. Method according to claim 1,
**characterized**
**in that** a driving activity parameter is determined by the electronic control unit and that the limit values for the gradient signal depend on the driving activity parameter.

3. Method according to claim 1 or 2,
**characterized**
**in that** limit values for the gradient signal depend on the current gear step.

4. Method according to one of the claims 1 - 3,
**characterized**
**in that** the downshift prior to the shifting characteristic curve being exceeded is only triggered if transmission temperature is within a settable range.

5. Method according to one of the claims 1- 4,
**characterized**
**in that** the downshift prior to the shifting characteristic curve being exceeded is only triggered if the output speed is within a settable range.

6. Method according to one of the claims 1 - 5,
**characterized**
**in that** the downshift prior to the shifting characteristic curve being exceeded is only triggered if the engine torque is within a settable range.

7. Method according to one of the claims 1-6,
**characterized**
**in that** the downshift prior to the shifting characteristic curve being exceeded is only triggered if the gear step into which the downshift is to be effected is not smaller than a gear step shiftable at the current output speed without causing impermissibly high engine speed.

## Revendications

1. Procédé pour la commande d'une boîte de vitesses à plusieurs étages de vitesse, à changement automatique, commandée par un dispositif de commande électronique, dans lequel il est prévu un organe de commande de la puissance pour la prédétermination de la charge et un signal qui dépend de la position de l'organe de la puissance (DKI), en particulier un signal de position de la pédale d'accélérateur ou un signal du volet des gaz, est détecté et, à partir de ce signal, est formé un signal de gradient (DKIG) proportionnel à une vitesse de variation, tandis que, pour chaque changement d'étage de vitesse, au moins une caractéristique de changement est enregistrée dans le dispositif de commande électronique, caractéristique qui associe à chaque position de l'organe de commande de la puissance une vitesse de rotation de changement ou vitesse de changement, et une rétrogradation dans l'étage de vitesse inférieure est déclenchée lorsque, au moment de l'actionnement de l'organe de commande de la vitesse destiné à élever la prédétermination de charge, une caractéristique de changement est franchie, le signal de gradient (DKIG) étant comparé à une valeur limite pouvant être prédéterminée (DKIG_Grenz) et une rétrogradation est déclenchée déjà avant qu'on franchisse la caractéristique de changement dans le sens de la montée lorsque la valeur réelle du signal de gradient est supérieure à la valeur limite, **caractérisé en ce que** la rétrogradation est de nouveau interrompue lorsque la valeur actuelle du signal de gradient devient inférieure à une autre valeur limite avant que la caractéristique de changement ne soit franchie de bas en haut.

2. Procédé selon la revendication 1, **caractérisé en ce que**, dans le dispositif de commande électronique, est formée une grandeur de référence d'activité de marche, et **en ce que** les valeurs limites pour le signal de gradient dépendent de la caractéristique d'activité de marche.

3. Procédé selon la revendication 1 ou 2, **caractérisé en ce que** les valeurs limites pour le signal de gradient dépendent de l'étage de vitesse actuel.

4. Procédé selon l'une des revendications 1 à 3, c a r a c t é r i s é en ce que la rétrogradation n'est déclenchée avant que la caractéristique de changement ne soit franchie de bas en haut que si la température de la boîte de vitesse se trouve dans un intervalle de valeur pouvant être prédéterminé.

5. Procédé selon l'une des revendications 1 à 4, **caractérisé en ce que** la rétrogradation n'est déclenchée avant que la caractéristique de changement ne soit franchie de bas en haut que si la vitesse de rotation de sortie se trouve dans une plage de valeur pouvant être prédéterminée.

6. Procédé selon l'une des revendications 1 à 5, **caractérisé en ce que** la rétrogradation n'est déclenchée avant que la caractéristique de changement ne soit franchie de bas en haut que si le couple du moteur se trouve dans une plage de valeur pouvant être prédéterminée.

7. Procédé selon l'une des revendications 1 à 6, **caractérisé en ce que** la rétrogradation n'est déclenchée avant que la caractéristique de changement ne soit franchie de bas en haut que si l'étage de vitesse dans lequel ils 'agit de rétrograder n'est pas inférieur à un étage de vitesse qui peut encore être enclenché à la vitesse de rotation de sortie actuelle sans engendrer des vitesses de rotation du moteur élevées de façon inadmissible.
